# EUROPEAN PATENT SPECIFICATION

(11) **EP 3 183 156 B1**
(45) Date of publication and mention of the grant of the patent: **31.08.2022**
(21) Application number: 15753132.8
(22) Date of filing: 13.08.2015
(51) Int. Cl.: B61D 43/00, B61H 13/00

(54) **AXLE GENERATOR ARRANGEMENT FOR A RAILWAY BRAKE SYSTEM**
ACHSGENERATOR-ANORDNUNG FÜR EIN EISENBAHNBREMSSYSTEM
DISPOSITIF DE GÉNÉRATRICE D'ESSIEU DESTINÉ À UN SYSTÈME DE FREINAGE POUR CHEMIN DE FER

(30) Priority: 22.08.2014 GB 201414971
(43) Date of publication of application: 28.06.2017
(73) Proprietor: Knorr-Bremse Rail Systems (UK) Limited, Hampton Park East Melksham Wiltshire SN12 6TL (GB)
(72) Inventor: HEMMINGS, Mark, Melksham Wiltshire SN12 6TL (GB); DRUETT, Ben, Melksham Wiltshire SN12 6TL (GB)
(74) Representative: Moore, David Simon
(86) International application number: PCT/GB2015/000240
(87) International publication number: WO 2016/027047

(56) References cited:
- EP-A1- 0 449 538
- EP-A1- 0 518 456
- EP-A1- 1 804 363
- WO-A1-98/52807
- JP-A- H0 467 748
- US-A- 6 107 692

## Description

The invention relates to an axle generator arrangement for a brake system for a railway vehicle incorporating wheel slide protection.

Railway vehicle braking systems are typically air brakes. Such systems incorporating wheel slide control and wheel spin control have established themselves in recent years in the passenger train market. Both wheel slide and wheel spin stem from low wheel to rail adhesion. Wheel slide typically occurs when braking a railway car and is a major cause of wheel damage, which in turn can lead to track damage.

A typical wheel slide control system comprises a sensor on each axle of the vehicle, which measure the speed of rotation of the axle. In use, the outputs of the sensors are then fed to the brake control unit, which compares the values with those of adjacent axles and if the difference exceeds a pre-determined limit, releases and re-applies the brake pressure until the axle speed falls within acceptable limits. This system has proven itself in practice and leads to improved braking performance and reduces the probability of damage to wheels and track. The problem of damage to wheels is particularly severe on freight trains, which as a consequence tend to travel more slowly than would otherwise be possible.

Most freight wagons do not have an autonomous electrical power supply, which effectively has prevented the widespread adoption of wheel slide protection in freight trains. Consequently, freight trains tend to travel much more slowly than passenger trains to avoid track damage, in particular that caused by wheel flats caused by wheel slide events.

US5488287 (Keschwari) discloses a method of producing electrical energy from the rotary motion of an axle by coupling a generator to the axle. The arrangement has a rotor coupled to the axle with permanent magnets distributed over the circumference and a stator provided with induction coils and an electronic unit for evaluating function. This arrangement has proved to be not particularly efficient and requires careful alignment of the parts on the axle end.

WO98/52807 discloses an Oldham coupling comprising a spring loaded three part coupling arrangement that is only arranged to permit movement in four degrees of motion.

The present invention seeks to provide an axle end generator for use in a railway braking system that is easier to fit to a freight wagon. The axle end generator can be mounted either on the end of the axle or mounted on the axle-box cover if present, depending on the freight wagon type and design.

According to the invention there is provided an axle generator arrangement for a brake system for a railway vehicle in accordance with the features of Claim 1.

The arrangement of the invention is advantageous in that it accommodates misalignments of the peg and the axle in use and in the particularly preferred embodiment radial, axial and angular misalignment, whilst also providing a low backlash rotational drive coupling with long engagement in a relatively compact size. Static misalignment can occur due to build-up of manufacturing dimensional tolerances of parts within the wagon and generator assembly. Dynamic misalignment can also occur due to movement of the wagon axle relative to the generator caused by worn axle bearings or associated parts.

Exemplary embodiments will now be described in greater detail with reference to the drawings in which:
Fig. 1 shows a first coupling arrangement for an axle-box cover mounted generator
Fig. 2 shows a second coupling arrangement for an axle-box cover mounted generator
Fig. 3 shows a third coupling arrangement for an axle end mounted generator Fig. 4 shows a forth coupling arrangement for an axle end mounted generator
Fig. 5 shows exaggerated potential misalignment between axle and generator

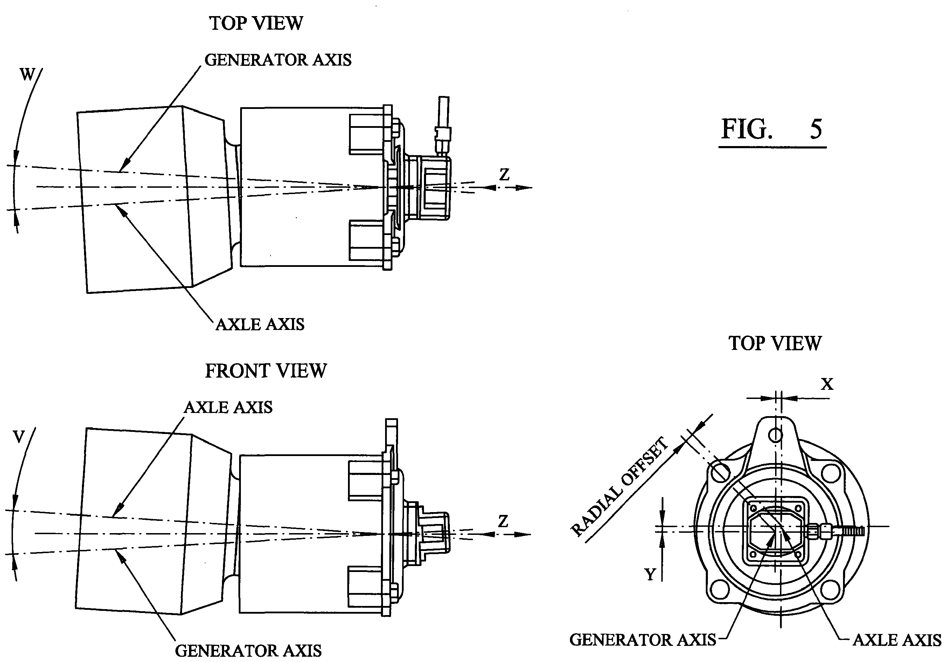

Figure 5 shows exaggerated potential misalignment between the wagon axle and the generator shaft which the coupling arrangement can accommodate. Misalignment between the wagon axle and generator shaft can occur in 5 degrees of freedom which comprise three directions X,Y,Z and 2 angles V and W. Misalignment can also be described as axial, radial and angular, whereby axial misalignment can occur in direction Z, radial misalignment can occur in or a combination of direction X and direction Y, and angular misalignment can occur in or a combination of angle V and angle W.

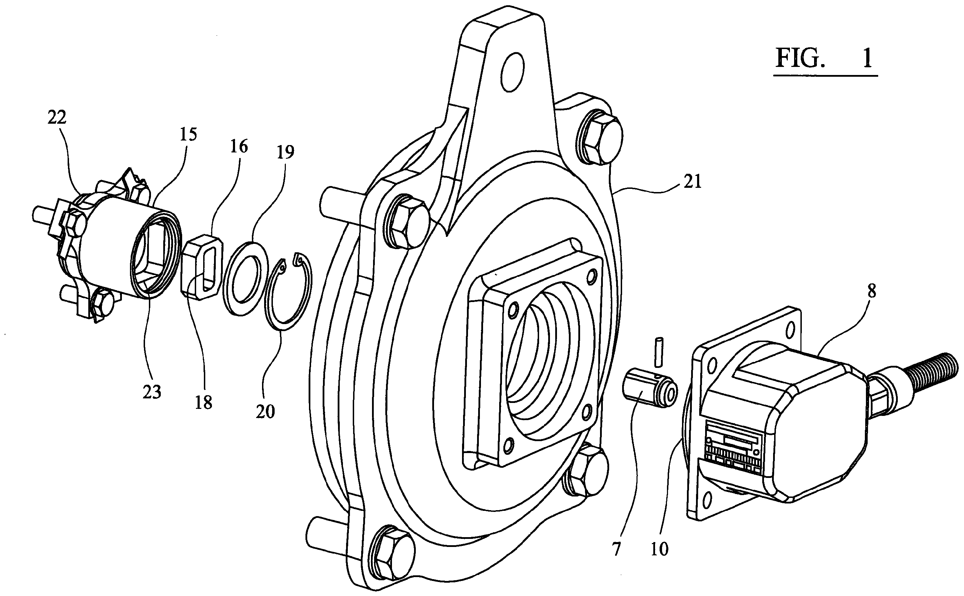

Figure 1 shows a first coupling arrangement according to the invention in which a generator 8 which is mounted on an axle-box cover 21, comprising a coupling hub 15 adapted to be fixed to the axle end having a spigot 22 to align to the axle end, having a generally rectangular opening 23 at its end, which rectangular opening is slightly recessed from the surface of the end.

A coupling element 16 is provided which is adapted to fit in the rectangular opening 23 and be retained in position by a washer 19 and spring clip 20, which sits in the slight recess in the assembled position. The coupling element 16 has a substantially rectangular form with chamfered external and internal corners on a generally rectangular opening 23. The coupling element 16 has substantially the same height as the opening so that it is constrained in its vertical motion, but not as wide as the opening so as to permit horizontal motion. The rectangular opening 23 is adapted to receive a peg 7, which peg is rigidly and rotatably connected with the generator 8. The coupling element 16 is not as deep as the rectangular opening 23 so as to permit angular misalignment relative to the rectangular opening 23.

The peg 7 is adapted to slide into and out from the coupling element 16 and also in the vertical plane with respect to the rectangular opening and permit angular misalignment between the peg 7 and coupling hub 15 but is constrained in the horizontal plane relative to coupling element 16. The length of peg 7 is such that visible engagement between peg 7 and coupling element opening 18 is achieved as the generator 8 is installed.

The generator 8 is adapted to be connected by way of four bolts to the axle box cover 21 and is provided with an alignment spigot 10 adapted to locate in the stepped opening on the axle box cover 21. The peg 7 is adapted to engage the drive shaft in the generator 8 so as to produce electricity when in motion. The coupling element 16 shown in Figure 1 provides a low backlash drive coupling and in general requires close tolerances but will have a clearance fit between coupling element 16 and coupling hub 23 and between coupling element 16 and peg 7.

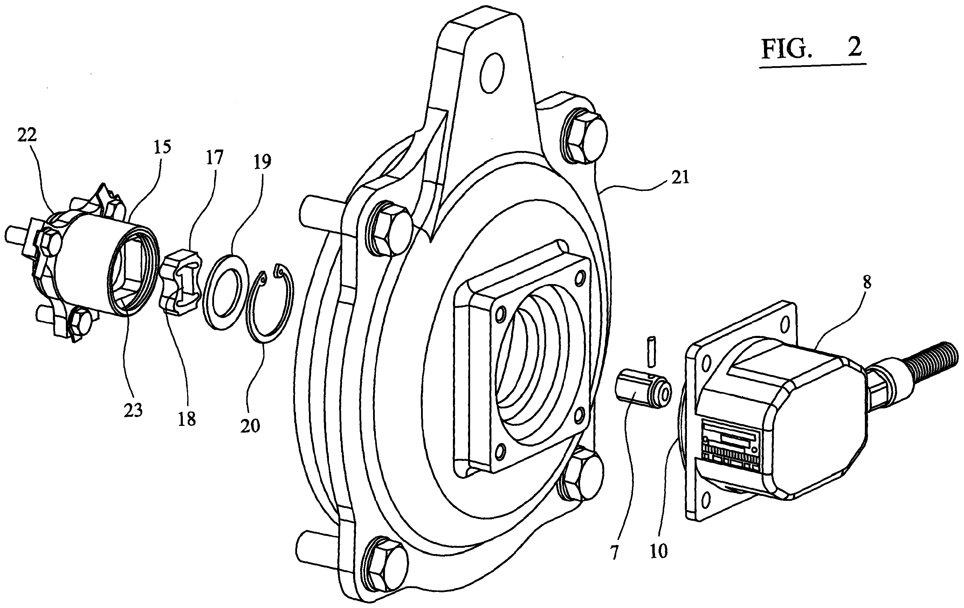

In the arrangement of Figure 2, the same parts are labelled with the same reference numerals. The difference lies in the different configuration of the coupling element 17, which is made with an interference fit to eliminate or substantially reduce backlash. The coupling element 17 has a generally rectangular shape as with the insert 16 but is provided with a waisted section intermediate to the ends of its two longer sides. The internal profile of the opening 18 comprises two substantially vertical walls in the region of the waisted section and then at either end of the opening the cut section is wider forming respective T shapes. These provide for a certain spring effect in the vertical plane to aid the insertion of the coupling element 17 into coupling hub 15.

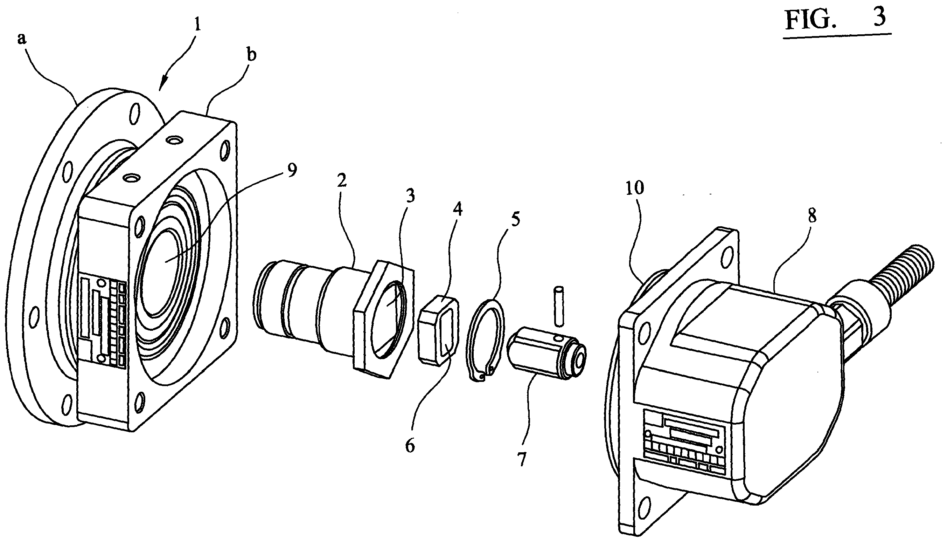

Figure 3 shows a third coupling arrangement according to the invention comprising a bearing adapter assembly 1 adapted to be fixed to the axle end having a stepped circular opening, having an axial opening 9 adapted to receive a generally cylindrical shaft 2. The bearing adapter assembly 1 comprises a first part a rigidly connected to the axle end and a second part b rotatably connected to the part a. The shaft 2 is provided with a generally rectangular opening 3 at its end remote from the axle, which rectangular opening is slightly recessed from the surface of the end.

A coupling element 4 is provided which is adapted to fit in the rectangular opening 3 and be retained in position by a spring clip 5, which sits in the slight recess in the assembled position. The coupling element 4 has a substantially rectangular form with chamfered external and internal corners on a generally rectangular opening 6. The coupling element 4 has substantially the same height as the opening so that it is constrained in its vertical motion, but not as wide as the opening so as to permit horizontal motion. The rectangular opening 6 is adapted to receive a peg 7, which peg is rigidly and rotatably connected with the generator 8. The coupling element 4 is not as deep as the rectangular opening 3 so as to permit angular misalignment relative to the rectangular opening 3.

The peg 7 is adapted to slide into and out from the coupling element 4 and also in the vertical plane with respect to the rectangular opening and permit angular misalignment between the peg 7 and shaft 2 but is constrained in the horizontal plane relative to coupling element 4. The length of peg 7 is such that visible engagement between peg 7 and coupling element opening 6 is achieved as the generator 8 is installed.

The generator 8 is adapted to be connected by way of four bolts to the bearing adapter assembly part 1b and is provided with an alignment spigot 10 adapted to locate in the stepped opening on the bearing adapter assembly lb. The peg 7 is adapted to engage the drive shaft in the generator 8 so as to produce electricity when in motion.

The coupling element 4 shown in Figure 3 provides a low backlash drive coupling and in general requires close tolerances but will have a clearance fit between coupling element 4 and shaft 3 and between coupling element 4 and peg 7.

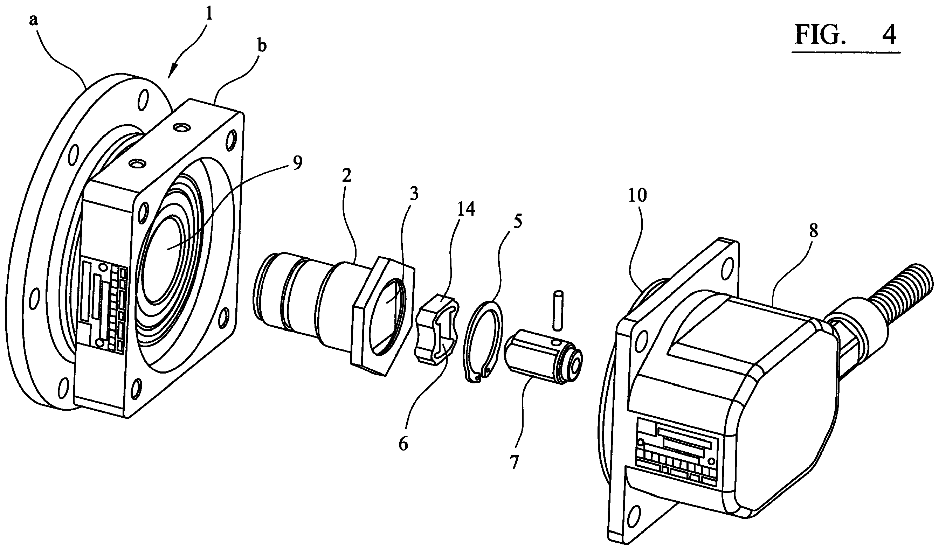

In the arrangement of Figure 4, the same parts are labelled with the same reference numerals. The difference lies in the different configuration of the coupling element 14, which is made with an interference fit to eliminate or substantially reduce backlash. The coupling element 14 has a generally rectangular shape as with the insert 4 but is provided with a waisted section intermediate to the ends of its two longer sides. The internal profile of the opening 15 comprises two substantially vertical walls in the region of the waisted section and then at either end of the opening the cut section is wider forming respective T shapes. These provide for a certain spring effect in the vertical plane to aid the insertion of the coupling element 14 into shaft 3.

The coupling elements and peg provide long engagement, easy to install, compact, low backlash rotational drive coupling between the freight wagon axle or shaft 2 and the generator 8, depending upon which generator mounting method is used, which permits axial, radial and angular misalignment of the rotating shafts which minimises the oscillations between the two parts and extends service life and reliability.

The axle generator arrangement offers an improvement in an order of magnitude with regards to allowable axial and radial misalignment when compared to the known technique of an Oldham coupling of similar axial length and a substantial improvement in the allowable angular misalignment.

## Claims

1. An axle generator (1) arrangement for a brake system for a railway vehicle, the generator comprising a peg (7) adapted to be driven by rotation of the axle, whereby rotation of peg rotating magnets, which magnets being parts of the generator (8) thereby generate electricity, the arrangement further comprising a coupling element(4), the peg being adapted to drivingly engage with the coupling element(4), which coupling element is adapted to transmit rotation from the axle to the peg, wherein the coupling element comprises an opening slot (6) adapted to receive the peg, the coupling element being configured to permit motion relative to the peg (7) in five degrees of freedom, **characterised in that** the coupling element (4) comprises two external substantially parallel sides and two internal substantially parallel sides perpendicular to the external sides such that the coupling element is adapted to permit motion with five degrees of freedom relative to the axle.

2. An axle generator arrangement according to Claim 1, wherein the peg (7) is adapted to slide into and out from the coupling element and also in the vertical plane with respect to the opening slot (6).

3. An axle generator arrangement according to Claim 1 or Claim 2, wherein the coupling element (4) is provided with an interference fit to eliminate or substantially reduce backlash.

## Patentansprüche

1. Eine Achsgenerator (1)-Anordnung für ein Bremssystem für ein Eisenbahnfahrzeug, wobei der Generator einen Zapfen (7) umfasst, der darauf ausgelegt ist, um durch die Drehung der Achse gedreht zu werden, wobei durch die Drehung des Zapfens Magneten gedreht werden und die Magneten Teil des Generators (8) zur Erzeugung von Strom sind, und wobei die Anordnung weiter ein Kupplungselement (4) umfasst und der Zapfen darauf ausgelegt ist, antreibend mit dem Kupplungselement (4) in Eingriff zu treten, und das Kupplungselement darauf ausgelegt ist, die Drehung von der Achse auf den Zapfen zu übertragen, und wobei das Kupplungselement eine Schlitzöffnung (6) umfasst, die darauf ausgelegt ist, den Zapfen aufzunehmen, und das Kupplungselement so konfiguriert ist, dass es eine Bewegung relativ zum Zapfen (7) in fünf Freiheitsgraden gestattet, **dadurch gekennzeichnet, dass** das Kupplungselement (4) zwei äußere, im Wesentlichen parallele Seiten und zwei interne, im Wesentlichen parallele und rechtwinklig zu den äußeren Seiten verlaufende Seiten umfasst, so dass das Kupplungselement darauf ausgelegt ist, eine Bewegung in fünf Freiheitsgraden relativ zur Achse zu gestatten.

2. Eine Achsgenerator-Anordnung nach Anspruch 1, wobei der Zapfen (7) darauf ausgelegt ist, in das und aus dem Kupplungselement sowie in vertikaler Ebene relativ zu der Schlitzöffnung (6) zu gleiten.

3. Eine Achsgenerator-Anordnung nach Anspruch 1 oder Anspruch 2, wobei das Kupplungselement (4) über eine Presspassung verfügt, um Spiel zu verhindern oder weitgehend zu reduzieren.

## Revendications

1. Agencement de générateur d'essieu (1) pour un système de frein pour un véhicule ferroviaire, le générateur comprenant une cheville (7) adaptée à être entraînée par la rotation de l'essieu, moyennant quoi la rotation de la cheville faisant tourner des aimants, lesquels aimants sont des pièces du générateur (8) pour générer de ce fait de l'électricité, l'agencement comprenant en outre un élément d'attelage (4), la cheville étant adaptée à s'engager par entraînement avec l'élément d'attelage (4), lequel élément d'attelage est adapté à transmettre la rotation de l'essieu à la cheville, dans lequel l'élément d'attelage comprend une fente d'ouverture (6) adaptée à recevoir la cheville, l'élément d'attelage étant configuré pour permettre un mouvement par rapport à la cheville (7) dans cinq degrés de liberté, **caractérisé en ce que** l'élément d'attelage (4) comprend deux côtés externes, essentiellement parallèles, et deux côtés internes, essentiellement parallèles, perpendiculaires aux côtés externes de sorte que l'élément d'attelage est adapté à permettre un mouvement avec cinq degrés de liberté par rapport à l'essieu.

2. Agencement de générateur d'essieu selon la revendication 1, dans lequel la cheville (7) est adaptée à coulisser dans et hors de l'élément d'attelage et également dans le plan vertical par rapport à la fente d'ouverture (6).

3. Agencement de générateur d'essieu selon la revendication 1 ou la revendication 2, dans lequel l'élément d'attelage (4) est pourvu d'un ajustement avec serrage pour éliminer ou essentiellement réduire le jeu.
